# EUROPEAN PATENT APPLICATION

(11) **EP 4 674 933 A1**
(43) Date of publication of application: **07.01.2026**
(21) Application number: 24763855.4
(22) Date of filing: 26.02.2024
(51) Int. Cl.: C10M 169/06, F16C 19/06, F16C 33/44, F16C 33/66, C10M 115/08, C10M 129/42, C10M 133/04, C10M 135/10, C10M 159/12, C10N 10/02, C10N 30/06, C10N 30/08, C10N 40/00, C10N 40/02, C10N 50/10

(54) **ROLLING BEARING**

(30) Priority: 28.02.2023 JP 2023030148
(71) Applicant: Minebea Mitsumi Inc., Kitasaku-gun, Nagano 3890293 (JP)
(72) Inventor: ASAI, Yusuke, Kitasaku-gun, Nagano 389-0293 (JP); KITAJIMA, Takuya, Kitasaku-gun, Nagano 389-0293 (JP); TAKIMOTO, Tatsuya, Kitasaku-gun, Nagano 389-0293 (JP)
(74) Representative: Winter, Brandl - Partnerschaft mbB
(86) International application number: PCT/JP2024/006864
(87) International publication number: WO 2024/181375

(57) **Abstract**

[Problem]Provided is a rolling bearing filled with a specific grease composition exhibiting elastic behavior and having excellent lubricating properties to resins and metals, the rolling bearing having a specific retainer. Also provided is a rolling bearing having excellent lifetime characteristics even under a high-temperature environment exceeding 100°C, as well as a motor incorporating the bearing. [Solution]A rolling bearing including an inner ring; an outer ring disposed coaxially with the inner ring on an outer peripheral side of the inner ring; a plurality of rolling elements disposed between the inner ring and the outer ring; a retainer holding the rolling elements; and a grease composition held between the inner ring and the outer ring. The grease composition contains a base oil, a thickener, an ionic liquid, and disodium sebacate; the grease composition has, in dynamic viscoelasticity measurement using a rotational rheometer as measured under conditions of a film thickness of 0.5 mm, a shear strain of 1%, and a frequency of 1 Hz, a storage elastic modulus of 2400 Pa or more at 25°C; and the retainer is a resin-made crown-shaped retainer made of a resin selected from the group consisting of polynonamethylene terephthalamide (PA9T), polyamide 46 (PA46), and polyetheretherketone (PEEK) resins. And a motor including the rolling bearing.

## Description

### Technical Field

The present invention relates to a rolling bearing filled with a grease composition and to a motor including the rolling bearing.

### Background Art

In recent years, a small motor used in a server fan or the like is required to have characteristics of being capable of withstanding stable use for a long time in a situation with the temperature around a bearing incorporated in the motor exceeding 100°C. Bearings incorporated in these motors and grease for lubrication to smoothen the operation of these components and the driving of the apparatus are also required to have long-time durability and reliability under such a high-temperature environment.

For example, as a grease composition for reducing friction and viscosity and improving high-temperature durability, a grease composition containing a base oil containing an ionic liquid, a fluorine-based thickener, and a corrosion additive, and a rolling bearing filled with the grease composition have been proposed (Patent Document 1).

### Citation List

### Patent Document

Patent Document 1: JP 2009-249585 A

### Summary of Invention

### Technical Problem

With the development of industry, a rolling bearing and grease incorporated in a motor and used at a high temperature exceeding 100°C are required not only to suppress rotation failure but also to achieve low torque and low power consumption. In addition, in a fan motor or the like, the rotation number of the motor is further increased in order to improve performance, so that use in a high-temperature and high-speed rotation environment is assumed and the required life is also remarkably prolonged.

An object of the present invention is to provide a rolling bearing filled with a specific grease composition exhibiting elastic behavior and having excellent lubricating properties to resins and metals, the rolling bearing having a specific retainer, as well as to provide a rolling bearing having excellent life characteristics even at a high temperature exceeding 100°C, and a motor incorporating the bearing.

### Solution to Problem

One aspect of the present invention relates to a rolling bearing including:
an inner ring;
an outer ring disposed coaxially with the inner ring on an outer peripheral side of the inner ring;
a plurality of rolling elements disposed between the inner ring and the outer ring;
a retainer holding the rolling elements; and
a grease composition held between the inner ring and the outer ring,
wherein the grease composition contains a base oil, a thickener, an ionic liquid, and disodium sebacate,
the grease composition has, in dynamic viscoelasticity measurement using a rotational rheometer as measured under conditions of a film thickness of 0.5 mm, a shear strain of 1%, and a frequency of 1 Hz, a storage elastic modulus of 2400 Pa or more at 25°C, and
the retainer is a resin-made crown-shaped retainer made of a resin selected from the group consisting of polynonamethylene terephthalamide (PA9T), polyamide 46 (PA46), and polyetheretherketone (PEEK) resins.

The present invention also relates to a motor including the rolling bearing.

### Brief Description of Drawings

FIG. 1 is a schematic view illustrating an example of a structure of a rolling bearing according to the present invention.
FIG. 2 is a schematic view illustrating an example of a structure of a motor according to the present invention.
FIG. 3 presents photographs of wear scars (ball and disc) of Example 1 and Comparative Example 3 in an evaluation of lubricating properties (metal-metal).
FIG. 4 presents white light interferometer measurement data of disc-side wear scars of Example 1 and Comparative Example 3 in an evaluation of lubricating properties (metal-metal).
FIG. 5 presents measurement results of storage elastic modulus (G') and loss elastic modulus (") of Example 1 and Comparative Example 3 in a viscoelasticity evaluation.
FIG. 6 presents measurement results of coefficient of friction and test temperature of Examples A to C and Comparative Example A in the evaluation of lubricating properties (metal-resin).
FIG. 7 presents photographs of wear scars (test pieces) of Example A and Comparative Example A in the evaluation of lubricating properties (metal-resin).

### Description of Embodiments

As described above, a fan motor used in a server fan or the like is increasingly used at a high temperature and a high speed, and a bearing incorporated in the motor is also required to have high reliability under such a severe environment. Further, the bearing is required to have low torque performance, and in order to reduce the stirring resistance of the grease leading to an increase in torque, the amount of the grease applied is made very small, and realization of oil film formation and lubrication by a small amount of oil separation is sought. However, when significant oil separation occurs due to use under a high-temperature environment or frictional heat generation, lubrication failure occurs immediately.

In addition, an extreme pressure additive is added to general grease. The extreme pressure additive forms an adsorption film (tribological film) having lubricity on a metal surface and contributes to reduction of frictional heat generation and suppression of wear. Unfortunately, the required life of the fan motor used in a server has now reached 10000 hours or more, and the formation of an adsorption film, the action of reducing friction and suppressing wear (film loss), and the reformation of an adsorption film by the extreme pressure additive are repeated. In the meantime, the extreme pressure additive is lost, and deterioration of the friction and wear characteristics, and in turn, lubrication failure occurs.

The present inventors have focused on the shape of the grease filled in the rolling bearing in order to solve the issue of the occurrence of the lubrication failure. Then, as a configuration for maintaining the grease shape even under the above-described severe environment, the present inventors adopted an ionic liquid and disodium sebacate described below. The present inventors have found that grease exhibiting elastic behavior is achieved by the configuration, and thereby the stirring resistance of the grease is suppressed, the shear heat generation due to stirring with high-speed rotation is suppressed, and the oil component is held in a small amount of the grease for a long time, so that extension of lubrication life can be expected. The present inventors have also found that the adoption of these components improves lubricating properties and can contribute to extension of lubrication life due to reduction of frictional heat generation.

The present inventors have also focused on the configuration of the rolling bearing, and adopted a resin-made retainer having excellent adsorptivity to the ionic liquid, and found that in particular, a resin-made crown-shaped retainer made of a polynonamethylene terephthalamide (PA9T), polyamide 46 (PA46), or polyetheretherketone (PEEK) resin as a resin component achieves excellent friction and wear resistance characteristics.

Hereinafter, this will be described in detail.

### [Rolling Bearing]

First, a preferred embodiment of the rolling bearing according to the present invention will be described in detail with reference to the accompanying drawings. Note that the present invention is not limited to the embodiments described below.

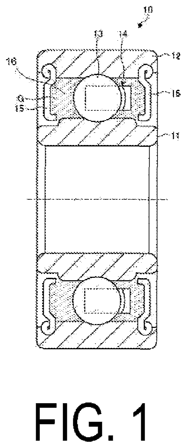

FIG. 1 is a radial cross-sectional view illustrating a rolling bearing 10 according to a preferred embodiment of the present invention. The rolling bearing 10 has a basic structure similar to a rolling bearing known in the art, and includes an annular inner ring 11, an outer ring 12, a plurality of rolling elements 13, a retainer 14, and a sealing member 15.

The inner ring 11 is a cylindrical structure disposed coaxially with a central axis at the outer peripheral side of a shaft (not illustrated). The outer ring 12 is a cylindrical structure disposed coaxially with the inner ring 11 at the outer peripheral side of the inner ring 11. Each of the plurality of rolling elements 13 is a ball disposed in a track at an annular bearing space 16 formed between the inner ring 11 and the outer ring 12. That is, the rolling bearing 10 in the present embodiment is a ball bearing.

The retainer 14 is disposed in the track to hold the plurality of rolling elements 13. The retainer 14 is an annular body arranged coaxially with the central axis of the shaft and includes a plurality of pocket parts for holding the rolling elements 13 on one side in the direction of the central axis, and in each of the pocket parts, the rolling element 13 is accommodated. The rolling elements 13 are held by the retainer 14 at predetermined intervals in a circumferential direction of the inner ring 11 and the outer ring 12, and falling-off of the rolling elements 13 and contact between the adjacent rolling elements 13 are suppressed.

The sealing member 15 is fixed to the inner peripheral surface of the outer ring 12 and extends toward the inner ring 11 side, and seals the bearing space 16. A grease composition G is filled in the bearing space 16 sealed by the sealing member 15. That is, the grease composition G is held between the inner ring 11 and the outer ring 12. For the grease composition G, a grease composition as described below is used. Note that the amount of the grease G filled inside the bearing space 16 can be, for example, from 5 to 50% of the volume.

The sealing member 15 is formed of, for example, a steel plate or rubber, and examples of the steel plate or rubber include a steel plate shield that is not in contact with an outer periphery of the inner ring 11, and a non-contact type rubber seal that is not in contact with the outer periphery of the inner ring 11. In the present invention, either of the sealing members, the steel plate shield or the non-contact type rubber seal, can be used. From the viewpoint of suppression of outgassing, the steel plate shield is preferably used. Note that the drawing illustrates an aspect including the sealing member 15, but the present invention also includes an aspect with the rolling bearing containing no sealing member.

In the rolling bearing 10 having the configuration described above, the grease composition G acts to reduce the friction between the rolling elements 13 and the retainer 14 as well as the friction between the rolling elements 13 and the inner ring 11 and the outer ring 12. Due to the reduction of the friction, the frictional torque is reduced, and the generation of frictional heat is also suppressed, so that smooth rotation of the inner ring 11 and the outer ring 12 is promoted. As can be seen from the configuration illustrated in FIG. 1, the grease composition G filled in the rolling bearing 10 lubricates between the rolling elements 13 and the inner ring 11 or the outer ring 12 when the rolling bearing 10 rotates.

In the rolling bearing according to the present invention, the retainer is a resin-made crown-shaped retainer made of a resin selected from the group consisting of polynonamethylene terephthalamide (PA9T), polyamide 46 (PA46), and polyetheretherketone (PEEK) resins. The retainer is required to be formed of a material essentially containing the above-described resin, and may be made of a composite material containing a reinforcing agent such as glass fiber or carbon fiber.

The rolling bearing according to the present invention is not particularly limited as to size, use conditions, and the like, but is particularly a rolling bearing having an outer diameter of 10 mm or less, and is suitable for use under high-temperature and/or high-speed conditions of a temperature of 100°C or more, for example, a temperature of 130°C, or a rotation number of 50000 rpm or more, for example, 100000 rpm or more or 130000 rpm or more.

The rolling bearing according to the present invention can be used as a rolling bearing for a small motor (e.g., a fan motor or a cleaner motor) used in automobiles, home appliances, information devices, and the like.

### [Motor]

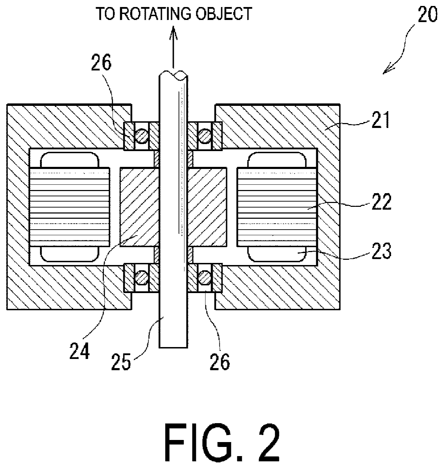

As an example, referring to FIG. 2, an embodiment of a motor including the rolling bearing of the present embodiment will be described in detail, but the present invention is not limited to the following embodiment.

FIG. 2 is a shaft-direction cross-sectional view of a motor according to an embodiment of the present invention. A motor 20 has a basic structure similar to a known motor, and includes a housing 21, a stator 22, a coil 23, a rotor magnet 24, a shaft 25, and rolling bearings 26 supporting the shaft 25.

The motor 20 generates a magnetic force by passing a current supplied from a power source (not illustrated) via a drive circuit to the coil 23 wound around the stator 22, thereby rotating the rotor magnet 24, and transmitting the rotation to an external rotating object through the shaft 25.

In the present invention, the rolling bearing according to the present invention can be suitably used as a bearing of a motor used in a blower, and in this case, an impeller (not illustrated) of the blower corresponds to the external rotating object.

### [Grease Composition]

The present inventors focused on the shape of the grease filled in the bearing as described above, and adopted an ionic liquid and disodium sebacate as a configuration for expecting suppression of stirring resistance, suppression of shear heat generation, realization of high-temperature and high-speed durability, and further, leading to low torque and reduction of power consumption by maintaining the shape of the grease to be elastic and hardly deformable, thereby achieving optimization of the storage elastic modulus of the grease composition.

Next, a grease composition to be filled in the rolling bearing according to the present invention will be described.

### <Base Oil>

In the grease composition filled in the rolling bearing according to the present embodiment, as the base oil, a synthetic oil generally used as a grease base oil, such as a synthetic hydrocarbon oil, an ether-based synthetic oil, or an ester-based synthetic oil can be used alone or in combination.

Examples of the synthetic hydrocarbon oil include normal paraffins; isoparaffins; polybutenes; polyisobutylenes; and polyalphaolefins (PAOs), such as 1-decene oligomer and co-oligomers of 1-decene and ethylene.

Examples of the ester-based synthetic oil include diester oils, such as dibutyl sebacate, di-2-ethylhexyl sebacate, dioctyl sebacate, dioctyl adipate, diisodecyl adipate, ditridecyl adipate, ditridecyl phthalate, and methyl acetyl ricinoleate; aromatic ester oils, such as trioctyl trimellitate, tri-2-ethylhexyl trimellitate, tridecyl trimellitate, tetraoctyl pyromellitate, and tetra-2-ethylhexyl pyromellitate; polyolester oils, such as trimethylolpropane caprylate, trimethylolpropane pelargonate, pentaerythritol-2-ethylhexanoate, and pentaerythritol pelargonate; and carbonate ester oils.

Examples of the ether-based synthetic oil include alkyl ether oils and alkyl diphenyl ether oils, such as monoalkyl diphenyl ether, dialkyl diphenyl ether, and polyalkyl diphenyl ether.

The base oil may be contained in a proportion of, for example, 70 mass% or more based on the total mass of the grease composition used in the present invention. For example, the base oil may be contained in a proportion of from 70 mass% to 90 mass% based on the total mass of the grease composition.

### <Thickener>

In the grease composition used in the present invention, a urea-based thickener can be preferably used as a thickener.

A urea compound has excellent heat resistance, water resistance, and particularly excellent stability at high temperatures, and thus is suitably used as a thickener at an application site under high-temperature environments.

Urea compounds such as diurea compounds, triurea compounds, and polyurea compounds can be used as the urea-based thickener. From the perspective of heat resistance and acoustic characteristics (silent properties), diurea compounds are preferably used. The type of the urea compound preferably includes at least one selected from aliphatic-aromatic urea, alicyclic-aliphatic urea, and aliphatic urea.

Known urea compounds can be used as the urea-based thickener.

Examples of the diurea compound used as the urea-based thickener include a diurea compound represented by Formula (1) set forth below:

R₁-NHCONH-R₂-NHCONH-R₃ Formula (1)

wherein R₁ and R₃ each independently represent a monovalent aliphatic hydrocarbon group, a monovalent alicyclic hydrocarbon group, or a monovalent aromatic hydrocarbon group, and R₁ and/or R₃ is a monovalent aliphatic hydrocarbon group or a monovalent alicyclic hydrocarbon group, and
R₂ represents a divalent aromatic hydrocarbon group.

Examples of the monovalent aliphatic hydrocarbon group include a linear or branched saturated or unsaturated alkyl group having 6 to 26 carbon atoms.

Examples of the monovalent alicyclic hydrocarbon group include a cycloalkyl group having 5 to 12 carbon atoms.

Examples of the aromatic hydrocarbon group include a monovalent or divalent aromatic hydrocarbon group having 6 to 20 carbon atoms.

The urea compound used as the urea-based thickener can be synthesized using an amine compound and an isocyanate compound.

Examples of the amine compound include aliphatic amines represented by hexylamine, octylamine, dodecylamine, hexadecylamine, octadecylamine (stearylamine), behenylamine, oleylamine and the like; alicyclic amines represented by cyclohexylamine and the like; and aromatic amines represented by aniline, p-toluidine, ethoxyphenylamine and the like.

Examples of the isocyanate compound include aromatic diisocyanates, such as phenylene diisocyanate, tolylene diisocyanate (TDI), diphenyldiisocyanate, diphenylmethane diisocyanate (MDI), and dimethylbiphenyl diisocyanate (TODI); and aliphatic diisocyanates, such as octadecane diisocyanate, decane diisocyanate, and hexane diisocyanate.

Note that, when an aromatic diurea compound obtained by using an aromatic monoamine as an amine raw material and an aromatic diisocyanate is used as a urea-based thickener, abnormal noise may possibly occur, and thus use of such an aromatic diurea compound needs consideration.

The urea-based thickener (urea compound) can be blended in an amount of, for example, from 10 to 20 mass% based on the total amount of the grease composition used in the present invention.

### <Ionic Liquid>

The grease composition applied to the rolling bearing according to the present embodiment essentially contains an ionic liquid.

In the known art, in order to release static electricity generated between components due to rotational friction, conductivity is imparted to a lubricant as necessary, and addition of an ionic liquid is considered as such a method.

In the present invention, it is considered that by use of the ionic liquid and disodium sebacate described below in combination, the storage elastic modulus of the grease composition is brought into an appropriate range, and elastic and hardly deformable grease is achieved, whereby shear heat generation due to stirring with high-speed rotation is suppressed, and further, reduction of frictional heat generation is achieved by formation of a strong tribological film, and the grease plays a role of extending the life of the lubricating performance.

The ionic liquid is not particularly limited as long as a fluorine-based ionic liquid is used and a desired storage elastic modulus can be achieved in combination with disodium sebacate described below.

For example, trihexyltetradecylphosphonium bis(trifluoromethanesulfonyl)imide ([THTDP][TFSI]) set forth below can be used.

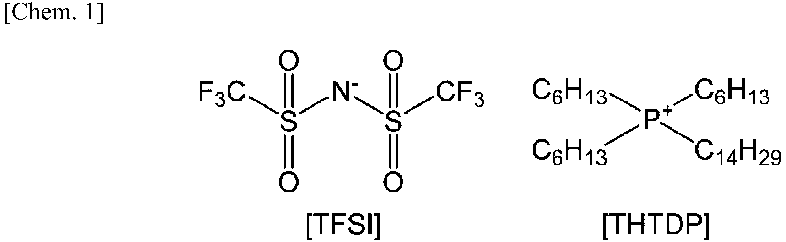

The ionic liquid can be blended in an amount of, for example, from 0.1 to 10 mass% based on the total amount of the grease composition used in the present invention.

### <Dispersant: Disodium Sebacate>

The grease composition applied to the rolling bearing according to the present embodiment contains disodium sebacate as a dispersant.

Disodium sebacate can be blended in an amount of, for example, from 0.1 to 10 mass% based on the total amount of the grease composition used in the present invention.

<Additional Additive>

The grease composition used in the present invention can contain an additive usually used in grease compositions as necessary within a range not impairing the effects of the present invention.

Examples of such an additive include antioxidants, extreme pressure additives, metal deactivators, anti-friction agents (wear resistant agents), rust preventives, oiliness improvers, viscosity index improvers, and thickening agents.

When these additional additives are contained, the added amount (total amount) is usually from 0.1 to 10 mass% based on the total amount of the grease.

Examples of the antioxidant include hindered phenol-based antioxidants, such as octadecyl-3-(3,5-di-t-butyl-4-hydroxyphenyl)propionate, pentaerythritol tetrakis[3-(3,5-di-t-butyl-4-hydroxyphenyl)propionate], 2,4-bis-(n-octylthio)-6-(4-hydroxy-3,5-di-t-butylanilino)-1,3,5-triazine, 1,3,5-trimethyl-2,4,6-tris(3,5-di-t-butyl-4-hydroxybenzyl)benzene, triethylene glycol-bis[3-(3-t-butyl-5-methyl-4-hydroxyphenyl)propionate], 1,6-hexanediol-bis[3-(3,5-di-t-butyl-4-hydroxyphenyl)propionate], 2,2-thio-diethylenebis[3-(3,5-di-t-butyl-4-hydroxyphenyl)propionate], and N,N'-hexamethylenebis(3,5-di-t-butyl-4-hydroxyhydrocinnamide); phenol-based antioxidants, such as 2,6-di-t-butyl-4-methylphenol and 4,4-methylenebis(2,6-di-t-butylphenol); and amine-based antioxidants, such as diphenylamine, diarylamine, triphenylamine, phenyl-α-naphthylamine, alkylated phenyl-α-naphthylamine, phenothiazine, and alkylated phenothiazine.

Examples of the extreme pressure additive include phosphorus-based compounds, such as phosphate esters, phosphite esters, and phosphate ester amine salts; sulfur-based compounds, such as sulfides and disulfides; chlorine-based compounds, such as chlorinated paraffin and chlorinated diphenyl; and metal salts of sulfur-based compounds, such as zinc dialkyldithiophosphate and molybdenum dialkyldithiocarbamate.

Examples of the metal deactivator include benzotriazole-based compounds, such as benzotriazoles, 1-[N,N-bis(2-ethylhexyl)aminomethyl]-benzotriazole, and 1-[N,N-bis(2-ethylhexyl)aminomethyl]-4-methylbenzotriazole; thiadiazole-based compounds, such as thiadiazoles, 2-mercaptothiadiazole, and 2,5-bis(alkyldithio)-1,3,4-thiadiazole; benzimidazole-based compounds, such as benzimidazoles, 2-mercaptobenzimidazole, and 2-(decyldithio)-benzimidazole; and sodium nitrite.

Furthermore, examples of the anti-friction agent (wear resistant agent) include tricresyl phosphate and polymeric esters.

Examples of the polymeric esters include esters of aliphatic monobasic carboxylic acids and dibasic carboxylic acids with a polyhydric alcohol. Specific examples of the polymeric esters include, but are not limited to, PRIOLUBE (registered trade name) product line available from Croda Japan K.K.

The grease composition used in the present invention can be obtained by blending the above-described base oil, urea-based thickener, ionic liquid, disodium sebacate and, as necessary, an additional additive.

In addition, for example, a grease composition can be obtained by blending an ionic liquid, disodium sebacate, and an additional additive as necessary into a urea-based grease (base grease) composed of the base oil and the urea-based thickener.

Usually, the content of the thickener based on the base grease is about from 10 to 30 mass%. For example, the content of the diurea compound (urea-based thickener) based on the urea-based grease can be, for example, about from 10 to 25 mass%, or about from 10 to 20 mass%.

### <Storage Elastic Modulus>

Since the grease composition used in the present invention has a storage elastic modulus in an appropriate range, the grease composition can exhibit elastic and hardly deformable grease behavior.

The storage elastic modulus is a value indicating the shape stability of the grease, and is an effective parameter for grasping the shape stability of the grease immediately after the grease is filled in the rolling bearing or during rotation of the rolling bearing.

In particular, in a rolling bearing used at a high temperature and a high speed, when the shape of the grease changes from the shape at the time of filling, the grease sticks to balls (rolling elements) or the like, leading to an increase in torque or rough torque of the rolling bearing, and the fiber structure of the thickener is broken due to shearing, so that deterioration of the grease or lubrication failure may occur. Therefore, in order to achieve initial and long-term torque stability and suppress lubrication failure, the shape maintaining ability (shape stability) of the grease is an important factor.

From the viewpoint of such shape stability of the grease, importantly, the grease composition used in the present invention has a storage elastic modulus of 2400 Pa or more at 25°C as measured under the above-described conditions (dynamic viscoelasticity measurement using a rotational rheometer: a film thickness of 0.5 mm, a shear strain of 1%, and a frequency of 1 Hz). However, if the storage elastic modulus is too high, since the grease is positioned on a revolving track of the rolling element, the resistance when the ball may pass over the grease increases, resulting in a concern about an increase in torque. Therefore, the storage elastic modulus is desirably set to a value of 4500 Pa or less, more preferably a value not exceeding 3500 Pa.

The present invention is not limited to the embodiments and specific examples described in the present specification, and various changes and variations can be made within the scope of the technical idea described in the claims.

### Examples

The present invention is described below in more detail with reference to examples. However, the present invention is not limited to the examples.

Grease compositions used in Example 1 and Comparative Examples 1 to 6 were prepared according to the blending amounts presented in Table 1 below.

The details and abbreviation of each component used in the preparation of the grease compositions are as follows.

### <Base Oil>

- Ester oil: mixed oil of trioctyl trimellitate (TOTM) and tetraoctyl pyromellitate (TOPM) [kinematic viscosity at 40°C: 100 mm²/s]

### <Thickener>

- Diurea compound: aliphatic-aromatic diurea compound

### <Additive>

- Ionic liquid: (see the structures represented by the following chemical formulae)
   (1) [TFSI][THTDP]
      Trihexyltetradecylphosphonium bis(trifluoromethanesulfonyl)imide
   (2) [TFSI][EMI]
      1-Ethyl-3-methylimidazolium bis(trifluoromethanesulfonyl)imide
   (3) [TFSI][BMP]
      1-Butyl-1-methylpyrrolidinium bis(trifluoromethanesulfonyl)imide
   (4) [ES][EMI]
      1-Ethyl-3-methylimidazolium ethyl sulfate 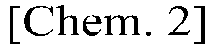 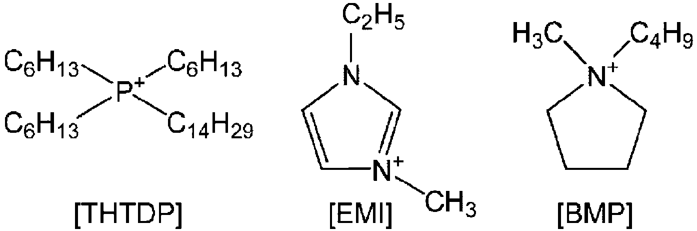 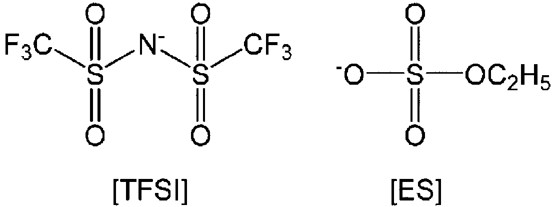
- Dispersant: disodium sebacate
- Additional additives

Extreme pressure additive: phosphate ester-based extreme pressure additive (triphenyl phosphorothionate, product name "Irgalube TPPT", BASF Japan Ltd.)

Metal deactivator: benzotriazole compound (1-[N,N-bis(2-ethylhexyl)aminomethyl]benzotriazole, product name "BT-LX", Johoku Chemical Co., Ltd.)

Antioxidant: diarylamine-based antioxidant (octylated/butylated diphenylamine, product name "Irganox L57", BASF Japan Ltd.)

The additional additives were added in such an amount of 3 mass% in total of the extreme pressure additive, metal deactivator, and antioxidant based on the total mass of each grease composition of examples and comparative examples.

The rolling bearing used in the following test evaluations is as follows.
- Rolling bearing: ball bearing with steel shield (inner diameter: 3 mm, outer diameter: 8 mm, width: 3 mm)
- Retainer: resin-made crown-shaped retainer

### <Material of Retainer>

Retainer A: PEEK [containing 20% of carbon fiber (CF)]
Retainer B: PA9T [containing 20% of carbon fiber (CF)]
Retainer C: PA46 [containing 30% of glass fiber (GF)]
Retainer D: PA66 [containing 30% of glass fiber (GF)]

The evaluation of lubricating properties, viscoelasticity evaluation, and heat resistance evaluation were performed according to the following procedures. The results obtained are presented in Tables 1 and 2.

### <(1) Evaluation of Lubricating Properties (Metal-Metal: Friction and Wear Test)>

A metal-metal friction and wear test was performed using a vibration friction tester (trade name: SRV) available from Optimol Instruments. The test was performed in a ball-on-disc system, and a ball (material: SUJ2, φ 10 mm) and a disc (material: SUJ2, φ 24 mm) were used. The test conditions were a load of 100 N, a measurement temperature of 80°C, a sliding distance of 1 mm, a frequency of 50 Hz, and a test time of 20 minutes. At the start of the test, 5 mg of each grease composition was fed.

After completion of the test, the size of the wear scar diameter at the ball side was measured (average value when N = 3). In addition, in Example 1 and Comparative Example 3, the maximum height difference P-V value of the wear scar at the disc side in the direction intersecting the sliding direction was measured (N = 1 in each case) by a white light interferometer (trade name: NewView 200) available from ZYGO Corporation. The wear scar diameter and the maximum height difference were evaluated according to the following determination criteria.

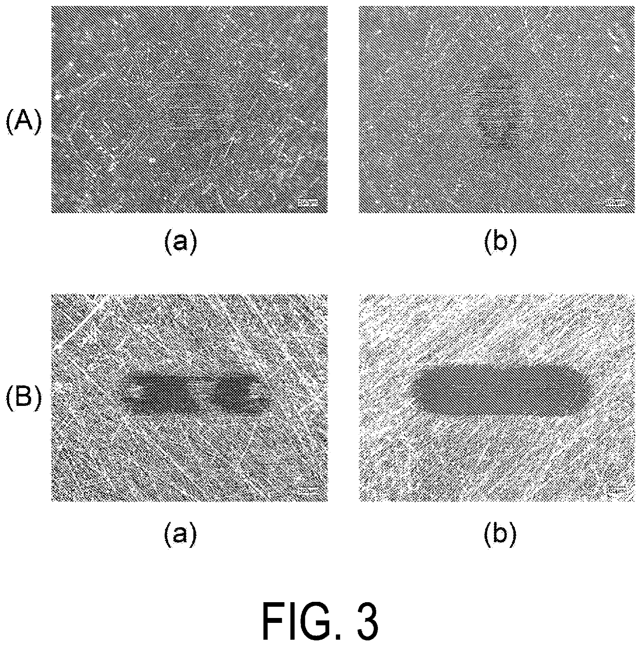

FIG. 3 presents photographs of wear scars on the ball and disc of Example 1 and Comparative Example 3 after the friction and wear scar test. FIG. 3(A) illustrates ball wear scars [(a) Example 1, (b) Comparative Example 3], and FIG. 3(B) illustrates disc wear scars [(a) Example 1, (b) Comparative Example 3].

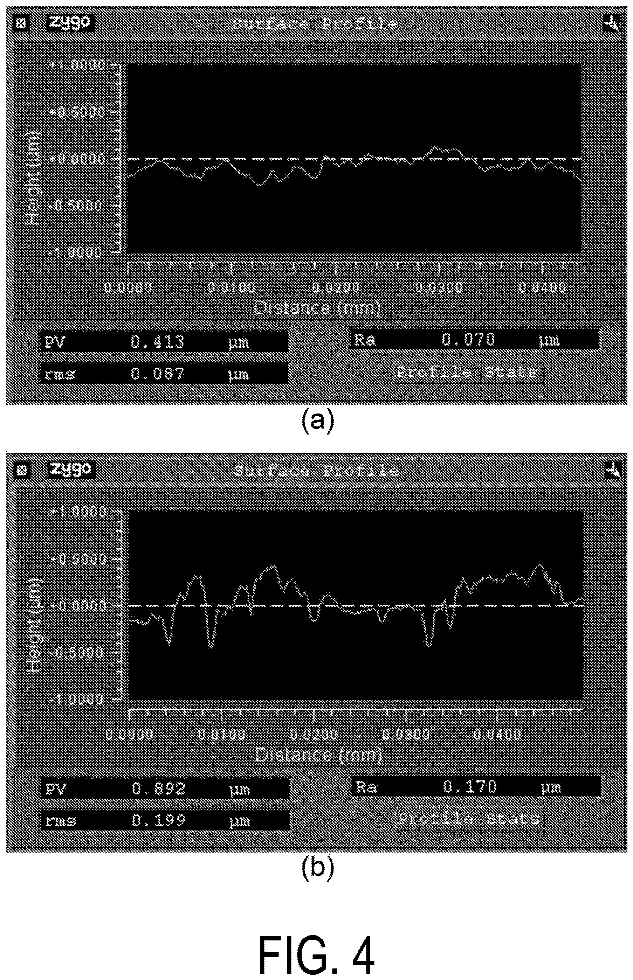

FIG. 4 presents white light interferometer measurement data of the discs of Example 1 and Comparative Example 3 after the friction and wear scar test [(a) Example 1, (b) Comparative Example 3].

### <Determination Criteria for Wear Scar Diameter>

A: The wear scar diameter of the ball is 330 µm or less.

N: The wear scar diameter of the ball is more than 330 µm.

### <Determination Criteria for Maximum Height Difference>

A: The maximum height difference P-V value of the wear scar on the disc is 0.5 µm or less.

N: The maximum height difference P-V value of the wear scar on the disc is more than 0.5 µm.

### <(2) Measurement and Evaluation of Oil Separation Amount (Unit: mm²/mg)>

Each of the prepared grease compositions (9 mg) was allowed to stand still in a φ 3 mm columnar shape on the drug-placing surface of a charta and left under an environment at 80°C for 24 hours. After a lapse of 24 hours, the area of the oil bleeding portion appeared in the charta was measured. The area of the oil bleeding portion per mass of the grease composition was calculated as the oil separation amount (mm²/mg), and the oil separation amount (average value when N = 3) was evaluated according to the following determination criteria.

In this test, the charta used was "pure white simili (medium)" (size: 105 mm × 105 mm, thickness: 42 µm, basis weight: 30 g/m²) available from Hakuaisha Co., Ltd., and the grease composition was allowed to stand still on the drug-placing surface (glossy surface) as described above.

### <Determination Criteria>

N: The oil separation amount is less than 180 mm²/mg.

A: The oil separation amount is 180 mm²/mg or more and 270 mm²/mg or less.

N: The oil separation amount is more than 270 mm²/mg.

### <(3) Viscoelasticity Evaluation (Measurement of Elastic Modulus (Unit: Pa) by Rheometer)>

The storage elastic modulus G' and the loss elastic modulus G" of each grease composition were measured using a rotational viscometer (Rheometer, trade name: MCR302) available from Anton Paar GmbH. The measurement was performed in a measurement mode of a strain dispersion method (strain was variable from 100% to 0.01%) using, as a jig, a φ 25 mm parallel plate (PP25) at a plate gap of 0.5 mm, a frequency of 1 Hz, and a temperature of 25°C. The measured value when the strain was 1% was defined as the storage elastic modulus G' (Pa), and the storage elastic modulus (average value when N = 3) was evaluated according to the following determination criteria.

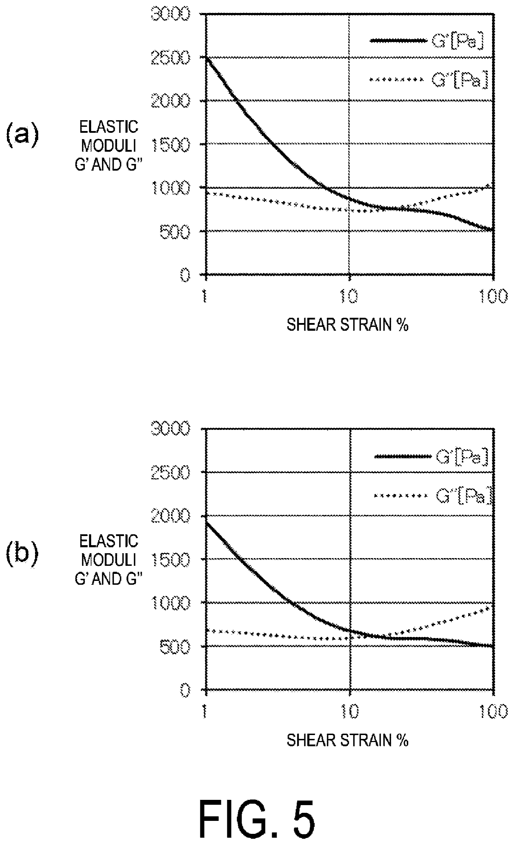

FIG. 5 presents measurement results of storage elastic modulus (G') and loss elastic modulus (G") with respect to shear strain of Example 1 and Comparative Example 3 [(a) Example 1, (b) Comparative Example 3].

### <Determination Criteria>

A: The storage elastic modulus is 2400 Pa or more and 4500 Pa or less.

N: The storage elastic modulus is less than 2400 Pa or more than 4500 Pa.

### <(4) Heat Resistance Evaluation (Durability Test) (1)>

Each grease composition was filled in a steel-mounted ball bearing (inner diameter: 3 mm, outer diameter: 8 mm, width: 3 mm, retainer B (PA9T [containing 20% of carbon fiber (CF)]) in an amount of from 25% to 35% of the volume of the bearing. The ball bearing was set in a housing, and a preload of 2 N was applied to the outer ring in the axial direction. Then, a shaft was inserted into the inner diameter of the bearing, and the shaft was connected to a rotation axis of a test motor so that the ball bearing may rotate on the inner ring.

Next, the housing was heated to 130°C, and the ball bearing was rotated at a test temperature of 130°C at a rotation speed of 120000 rpm. The time until the ball bearing stopped was measured.

As a stop condition, a time point when the torque increased and the rotation speed reached a value lower by 10% from the specified value was regarded as stop, and the test time until the stop was defined as the elapsed time (hr). For each grease composition, the test was performed three times, an average value was obtained, and evaluation was performed according to the following determination criteria.

### <Determination Criteria>

A: The elapsed time is 10000 hr or more.

N: The elapsed time is less than 10000 hr.

### [Table 1]

**[Table 1]**

| | | | | | Example | Comparative Example | | | | | |
|---|---|---|---|---|---|---|---|---|---|---|---|
| | | | | | 1 | 1 | 2 | 3 | 4 | 5 | 6 |
| Base oil | | Ester oil (TOTM + TOPM) (100 m²/s)*¹ | | | 76 | 76 | 76 | 76 | 77 | 79 | 81 |
| Thickener | | Diurea compound (aromatic-aliphatic diurea) | | | 15 | 15 | 15 | 15 | 16 | 16 | 16 |
| Additive | | Ionic liquid | | (1) [TFSI][THTDP] | 4 | | | | 4 | | |
| | | | | (2) [TFSI][EMI] | | 4 | | | | | |
| | | | | (3) [TFSI][BMP] | | | 4 | | | | |
| | | | | (4) [ES][EMI] | | | | 4 | | | |
| | | Dispersant | | Disodium sebacate | 2 | 2 | 2 | 2 | | 2 | |
| | | Additional additives (extreme pressure additive, metal deactivator, antioxidant) | | | 3 | 3 | 3 | 3 | 3 | 3 | 3 |
| Evaluation of lubricating properties (metal-metal) | | | Ball wear scar diameter actual measurement value [µm] | | 330 | 327 | 336 | 347 | 338 | 337 | 340 |
| | | | Determination*² | | A | A | N | N | N | N | N |
| | | | P-V value of disc wear scar actual measurement value [µm] | | 0.4 | | | 0.89 | | | |
| | | | Determination*³ | | A | | | N | | | |
| Evaluation of oil separation properties | | | Measured value [mm²/mg] | | 181.5 | 175.4 | 177.9 | 182.7 | 182.2 | 183.8 | 188.4 |
| | | | Evaluation*⁴ | | A | N | N | A | A | A | A |
| Viscoelasticity evaluation (storage elastic modulus) | | | Measured value of G' [Pa] | | 2508.5 | 2220.9 | 2146.2 | 1921.3 | 1971.1 | 2271 | 1877.1 |
| | | | Determination*⁵ | | A | N | N | N | N | N | N |
| Heat resistance evaluation (durability test) | | | Elapsed time [hr] | | >10000 | 7000 | 5500 | 5000 | 8000 | 6500 | 1000 |
| | | | Determination*⁶ | | A | N | N | N | N | N | N |
| Note: | *1 Numerical value in parentheses indicates kinematic viscosity at 40°C | | | | | | | | | | |
| | *2 A (suitable): Ball wear scar diameter is 330 µm or less | | | | N (unsuitable): Ball wear scar diameter is more than 330 µm | | | | | | |
| | *3 A (suitable): P-V value of disc wear scar is 0.5 µm or less | | | | N (unsuitable): P-V value of disc wear scar is more than 0.5 µm | | | | | | |
| | *4 A (suitable): Oil separation amount is 180 mm²/mg or more and 270 mm²/mg or less | | | | N (unsuitable): Oil separation amount is less than 180 mm²/mg or more than 270 mm²/mg | | | | | | |
| | *5 A (suitable): Storage elastic modulus is 2400 Pa or more and 4500 Pa or less | | | | N (unsuitable): Storage elastic modulus is less than 2400 Pa or more than 4500 Pa | | | | | | |
| | *6 A (suitable): Elapsed time is 10000 hours or more | | | | N (unsuitable): Elapsed time is less than 10000 hours | | | | | | |

### <(5) Evaluation of Lubricating Properties (Metal-Resin: Friction and Wear Test)>

A metal-resin friction and wear test was performed using a multifunctional friction and wear tester (trade name: UMT TriboLab) available from Bruker Corporation. The test was performed in a ball-on-disc system, and a ball (material: SUJ2, φ 10 mm) and a disc (length: 30 mm, width: 10 mm, thickness: 4 mm) made of the material presented in Table 2 were used. The test conditions were a load of 49 N, room temperature, a sliding distance of 12.5 mm, a frequency of 20 Hz, and a test time of 2 minutes. At the start of the test, 5 mg of the grease composition of Example 1 was applied to the ball.

During the test, the coefficient of friction and the temperature of the upper ball were measured over time, and evaluation was performed according to the following determination criteria from the value of the coefficient of friction (average value when N = 3) after a lapse of 2 minutes (120 seconds).

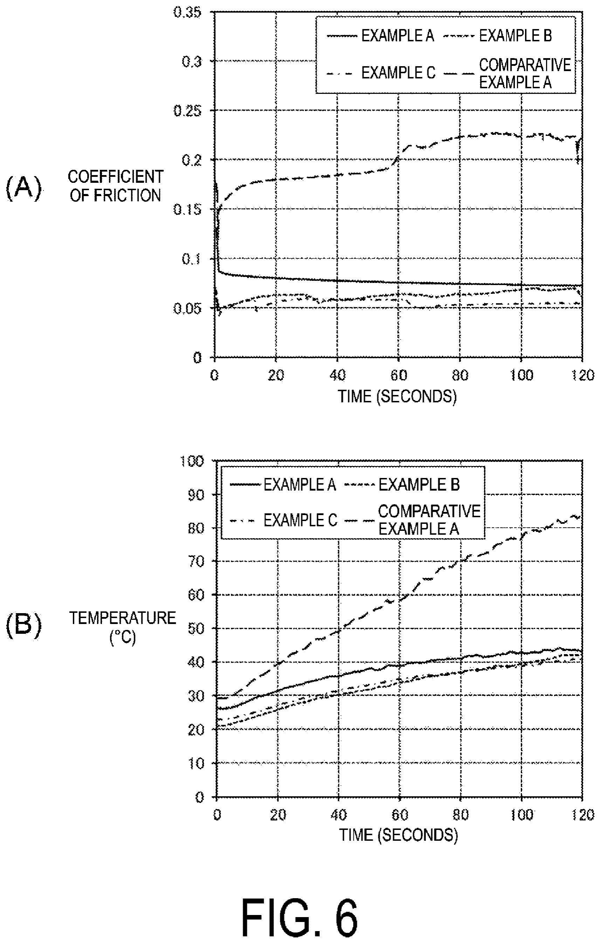

FIG. 6 presents measurement results of coefficient of friction and temperature (°C) (upper ball) with respect to test time (s) in Examples A to C and Comparative Example A [(A) coefficient of friction, (B) temperature (upper ball)].

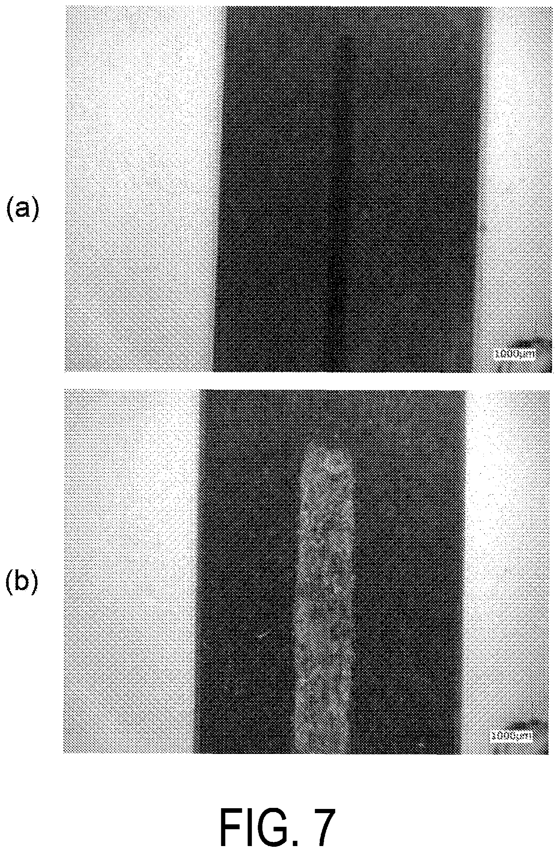

FIG. 7 presents photographs of wear scars on the discs of Example A and Comparative Example C after the friction and wear scar test [(a) Example A, (b) Comparative Example A].

### <Determination Criteria>

A: The coefficient of friction is 0.1 or less.

N: The coefficient of friction is more than 0.1.

### <(6) Heat Resistance Evaluation (Durability Test) (2)>

The heat resistance evaluation was performed in the same procedure as in <(4) Heat resistance evaluation (durability test) (1)> above except that the retainer used in the steel-mounted ball bearing was changed to the retainer presented in Table 2, and the grease composition of Example 1 was used as the grease composition.

### [Table 2]

**[Table 2]**

| Material of disc/retainer type | | Example A | Example B | Example C | Comparative Example A |
|---|---|---|---|---|---|
| | | PEEK (CF 20%) | PA9T (CF 20%) | PA46 (GF 30%) | **PA66** (GF 30%) |
| | | Retainer A | Retainer B | Retainer C | Retainer D |
| Evaluation of lubricating properties (resin-metal) | Coefficient of friction | 0.0725 | 0.06 | 0.0551 | 0.224 |
| | Determination*⁷ | A | A | A | N |
| Heat resistance evaluation (durability test) | Elapsed time [hr] | >10000 | >10000 | >10000 | 3500 |
| | Determination*⁸ | A | A | A | N |

| | | | | | |
|---|---|---|---|---|---|
| Note: *7 A (suitable): Coefficient of friction (after 120 seconds) is 0.1 or less *8 A (suitable): Elapsed time is more than 10000 hours N (unsuitable): Coefficient of friction (after 120 seconds) is more than 0.1 N (unsuitable): Elapsed time is 10000 hours or less | | | | | |

As presented in Table 1, the grease composition of Example 1 had a storage elastic modulus of more than 2400 Pa, and the actual grease composition had a resilient shape like agar. As illustrated in FIGS. 3 to 5, it can be recognized that, in Example 1, the wear scar was small (thin) in both the ball and the disc (FIGS. 3(A)(a) and 3(B)(a)), the surface roughness was small (FIG. 4(a)), and the elastic modulus G' when the strain was 1% was large (FIG. 5(a)), compared to Comparative Example 3 (FIGS. 3(A)(b), 3(B)(b), 4(b), and 5(b)). As described above, in the friction and wear test (metal-metal) using the grease composition, the friction and wear scar on the ball was 330 µm or less, and the maximum height difference P-V value of the friction and wear scar on the disc was about 0.4 µm, and thus it was recognized that the friction and wear was less likely to occur and the grease composition had excellent lubricity. In addition, in Example 1, in the test of rotating the rolling bearing including, as the retainer, the resin-made crown-shaped retainer containing PA9T as a resin component at a high temperature and a high speed, no abnormal noise or the like was generated even after 10000 hours, and it was recognized that the rolling bearing had excellent durability at a high temperature and a high speed.

On the other hand, in Comparative Examples 1 to 3 including the ionic liquids (2) to (4) instead of the ionic liquid (1) used in the example, Comparative Example 4 including no disodium sebacate used, Comparative Example 5 including no ionic liquid used, and Comparative Example 6 including no disodium sebacate and ionic liquid used, the storage elastic modulus was less than 2400 Pa in all the cases, and these grease compositions had a soft touch and were difficult to maintain the shape compared to Example 1. In the friction and wear test (metal-metal) using these grease compositions, the friction and wear scar on the ball was 330 µm or less in Comparative Example 1, but exceeded 330 µm in Comparative Examples 2 to 6, and the results suggested that the grease compositions had poor lubricity. In Comparative Example 3, the maximum height difference P-V value of the friction and wear scar on the disc was about 0.9 µm, and was twice or more the maximum height difference of Example 1. As illustrated in FIG. 3(B)(b) and FIG. 4(b), a deep friction scratch was recognized along the sliding direction in the disc test piece for the friction and wear test (metal-metal) of Comparative Example 3. Further, as for the test of rotating the rolling bearing including, as the retainer, the resin-made crown-shaped retainer containing PA9T as a resin component at a high temperature and a high speed, in these comparative examples, the torque increased before 10000 hours from the start of the test, and the rotation speed was lowered by 10% from the specified value, resulting in the stop of the test.

As presented in Table 2, in the rolling bearings including, as the retainer, the resin-made crown-shaped retainer containing PEEK (Example A), PA9T (Example B), or PA46 (Example C) as a resin component, the coefficient of friction was as low as 0.1 or less [see FIG. 6(A)], and even after a lapse of time of the friction and wear test, the temperature rise of the upper ball was suppressed to be low as compared with the comparative example described below [see FIG. 6(B)]. In addition, as illustrated in FIG. 7(A), the wear scar on the disc after the test (Example A) was thin. In the test of rotating the rolling bearing at a high temperature and a high speed, no abnormal noise or the like was generated even after 10000 hours, and the rolling bearing had excellent durability.

On the other hand, even when the grease composition of Example 1 was used, in the rolling bearing of Comparative Example A including, as the retainer, the resin-made crown-shaped retainer containing PA66 as a resin component, the coefficient of friction greatly increased to 0.224 [see FIG. 6(A)], and the temperature of the upper ball greatly increased with the lapse of time of the friction and wear test [see FIG. 6(B)]. Further, as illustrated in FIG. 7(B), the wear scar on the disc after the test was clearer than the wear scar of Example A illustrated in FIG. 7(A), and in the high-temperature and high-speed rotation test, abnormal noise was generated after 3500 hours from the start of the test, resulting in rotation failure.

The best embodiments have been described in detail above, but the present invention is not limited to the embodiments described above, and variations, modifications, and the like within a range achieving the object of the present invention are included in the present invention.

### Reference Signs List

10... Rolling bearing; 11... Inner ring; 12...Outer ring; 13... Rolling element; 14...Retainer;
15... Sealing member; 16... Bearing space;
20...Motor; 21...Housing; 22... Stator; 23...Coil; 24...Rotor magnet; 25...Shaft; 26... Bearing

## Claims

1. A rolling bearing, comprising:
an inner ring;
an outer ring disposed coaxially with the inner ring on an outer peripheral side of the inner ring;
a plurality of rolling elements disposed between the inner ring and the outer ring;
a retainer holding the rolling elements; and
a grease composition held between the inner ring and the outer ring,
wherein the grease composition comprises a base oil, a thickener, an ionic liquid, and disodium sebacate,
the grease composition has, in dynamic viscoelasticity measurement using a rotational rheometer as measured under conditions of a film thickness of 0.5 mm, a shear strain of 1%, and a frequency of 1 Hz, a storage elastic modulus of 2400 Pa or more at 25°C, and
the retainer is a resin-made crown-shaped retainer comprising a resin selected from the group consisting of polynonamethylene terephthalamide (PA9T), polyamide 46 (PA46), and polyetheretherketone (PEEK) resins.

2. The rolling bearing according to claim 1, wherein the ionic liquid is trihexyltetradecylphosphonium bis(trifluoromethanesulfonyl)imide ([THTDP][TFSI]).

3. The rolling bearing according to claim 1, wherein the thickener is a urea-based thickener, and the urea-based thickener contains a diurea compound represented by General Formula (1) set forth below:
R₁-NHCONH-R₂-NHCONH-R₃ (1)
where R₁ and R₃ each independently represent a monovalent aliphatic hydrocarbon group, a monovalent alicyclic hydrocarbon group, or a monovalent aromatic hydrocarbon group, and R₁ and/or R₃ is a monovalent aliphatic hydrocarbon group or a monovalent alicyclic hydrocarbon group, and
R₂ represents a divalent aromatic hydrocarbon group.

4. A motor, comprising the rolling bearing according to any one of claims 1 to 3.
